# EUROPEAN PATENT APPLICATION

(11) **EP 2 645 519 A2**
(43) Date of publication of application: **02.10.2013**
(21) Application number: 13161762.3
(22) Date of filing: 28.03.2013
(51) Int. Cl.: H02J 3/38

(54) **System and method for controlling solar power conversion systems**

(30) Priority: 30.03.2012 US 201213435111
(71) Applicant: General Electric Company, Schenectady, New York 12345 (US)
(72) Inventor: O'Brien, Kathleen Ann, Niskayuna, NY 12309 (US); Jain, Palak, Las Cruces, NM 88001 (US); Schelenz, Owen Jannis Samuel, Niskayuna, NY 12309 (US); Baggu Data Venkata Satya, Murali Mohan, Niskayuna, NY 12309 (US)
(74) Representative: Picker, Madeline Margaret

(57) **Abstract**

A solar power conversion system 10 is provided. The system includes photovoltaic modules 12 for generating direct current (DC) power. The system also includes power converters 14 for converting the DC power to alternating current (AC) power wherein each of the power converters comprises a local controller 20, 24 and at least some of the local controllers 24 are individually operable as a central controller 22 for providing central control signals to the remaining local controllers and exactly one of the local controllers from the at least some local controllers is operable as the central controller 22 at a given point of time.

## Description

The invention relates generally to solar power conversion systems and, more particularly, to a system and method for controlling solar power conversion systems.

With the rising cost and scarcity of conventional energy sources and concerns about the environment, there is a significant interest in alternative energy sources such as solar power and wind power. Power converters are used to convert solar and wind energy to usable power that is transmitted over a power grid or directly to a load.

For utility scale solar power conversion systems, power converters typically include central controllers. A central controller may be used to control the general operations of the power converters in the solar power conversion system as well as to coordinate combined power from the power converters by generating complex commands regarding curtailment and power output for example. The central controller typically monitors grid signals at the point of interconnection to the grid and generates various commands that are sent to local controllers embedded within individual power converters. In such embodiments, if the central controller is unable to transmit commands and control signals, the power converters may cease to operate in a worst case scenario or, even if operable, will experience increased operational losses and reduced efficiency.

Additionally, centrally controlled solar power conversion systems may be more vulnerable to cyber-attacks as the central controller is a single point of contact for all the power converters such that malicious data from the central controller may propagate with a higher rate resulting in faster degradation of the solar power conversion system.

Hence, there is a need for an improved system to address the aforementioned issues.

In one embodiment, a solar power conversion system is provided. The system includes photovoltaic modules for generating direct current (DC) power. The system also includes power converters for converting the DC power to alternating current (AC) power. Each of the power converters comprises a local controller and at least some of the local controllers are individually operable as a central controller for providing central control signals to the remaining local controllers. Exactly one of the local controllers from the at least some local controllers is operable as the central controller at a given point of time.

In another embodiment, a method for controlling a solar power conversion system comprising a plurality of power converters including respective local controllers with at least some of the local controllers being individually operable as a central controller is provided. The method includes operating exactly one of the local controllers as the central controller. The method also includes using the central controller for obtaining central control signals. The method further includes providing the central control signals from the central controller to the remaining local controllers.

In yet another embodiment, a power conversion system is provided. The power conversion system includes power converters for converting power from a power source to power for transmission to a power grid, each of the power converters includes a local controller and at least some of the local controllers are individually operable as a central controller for providing central control signals to the remaining local controllers wherein one of the local controllers from the at least some local controllers is operable as the central controller at a given point of time.

These and other features, aspects, and advantages of the present invention will become better understood when the following detailed description is read with reference to the accompanying drawings in which like characters represent like parts throughout the drawings, wherein:
FIG. 1 is a schematic representation of a solar power conversion system including one local controller operating as a first in time central controller in accordance with an embodiment of the invention.
FIG. 2 is a schematic representation of a solar power conversion system including another local controller operating as a second in time central controller upon failure of the first in time central controller in accordance with an embodiment of the invention.
FIG. 3 is a schematic representation of a solar power conversion system including a device coupled at a point of interconnection for sensing data in accordance with an embodiment of the invention.
FIG. 4 is a flow chart representing steps involved in a method for controlling a solar power conversion system in accordance with an embodiment of the invention.

Unless defined otherwise, technical and scientific terms used herein have the same meaning as is commonly understood by one of ordinary skill in the art to which this disclosure belongs. The terms "first", "second", and the like, as used herein do not denote any importance, but rather are used to distinguish one element from another. Also, the terms "a" and "an" do not denote a limitation of quantity, but rather denote the presence of at least one of the referenced items. The term "or" is meant to be inclusive and mean one, some, or all of the listed items. The use of "including," "comprising" or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect. Furthermore, the terms "circuit," "circuitry," "controller," and "processor" may include either a single component or a plurality of components, which are either active and/or passive and are connected or otherwise coupled together to provide the described function.

Embodiments of the present invention include a power conversion system that includes photovoltaic modules for generating direct current (DC) power. The direct current (DC) power is converted to alternating current (AC) power by power converters. Each power converter includes a local controller. At least some of the local controllers are individually operable as a central controller that provides central control signals to the remaining local controllers. Although more than one local controller has the capacity to operate as the central controller, at any given point in time, exactly one actually operates as the central controller. Various solar power converter configurations exist for converting the DC power output from PV arrays into AC power. One implementation of a solar power converter has two stages including a DC-DC converter stage and a DC-AC converter stage. The DC-DC converter controls the flow of DC power from the PV arrays onto a DC bus. The DC-AC converter converts the DC power supplied to the DC bus into AC power that can be output to the power grid. Another implementation of a solar power converter has a single stage comprising a DC-AC converter. Embodiments of the present invention may be used in either type of power converter implementation.

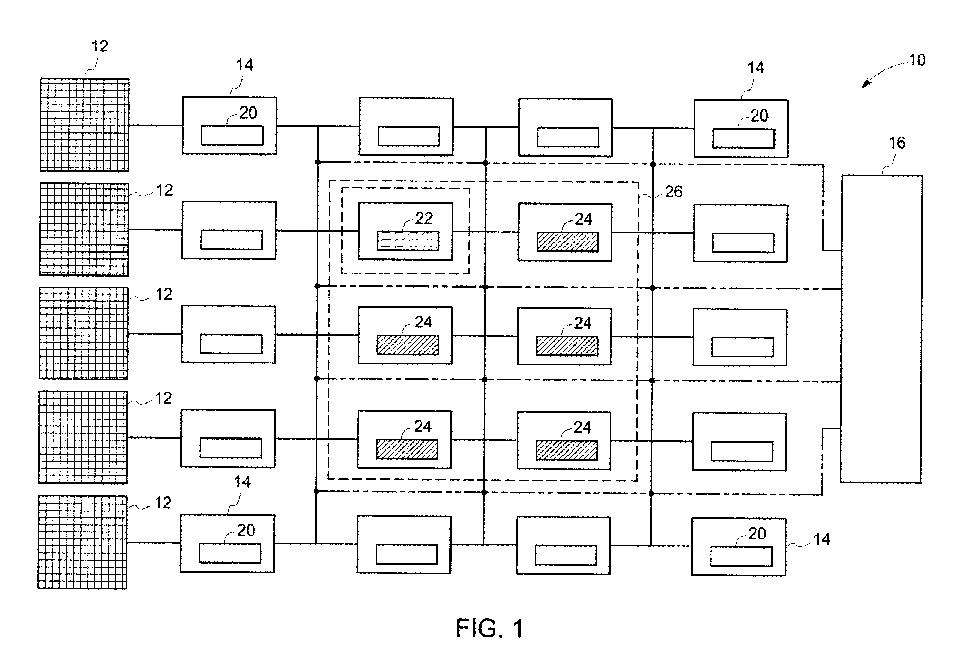

FIG. 1 is a schematic representation of the solar power conversion system 10 including one local controller operating as a central controller in accordance with an embodiment of the invention. The solar power conversion system 10 includes photovoltaic modules 12 that generate DC power. The DC power is transferred to power converters 14 that convert the DC power to AC power and transmit the AC power to a power grid 16 which may comprise a utility-controlled type grid and/or one or more loads, for example.

Each of the power converters includes a local controller 20, 24 that controls at least some of the operations of the respective power converter 14. In one embodiment, at least some of local controllers 24 are further configured to operate as the central controller 22. In some embodiments, all of the local controllers are configured to operate as the central controller 22.

The local controllers 24 that are configured for operating as the central controllers 22 typically will not all operate in that manner at the same time. In one embodiment, exactly one local controller 24 operates as the central controller 22 at a given point of time. In a more specific embodiment, one local controller 24 is selected randomly to operate as the central controller 22. In another embodiment, the central controller 22 is selected by using a sequence technique wherein a sequence number is assigned to each local controller 24 when initiating the control system. For example, if a local controller 24 with a sequence number 1 operating as the central controller 22 fails, the local controller 24 with the sequence number 2 will assume the role of the central controller 22. In other embodiments, information about which local controllers have worked well or not worked well in the past can be used as part of the selection process. The local controller 24 assumes control as the central controller 22 by handshaking with each of the local controllers 20, 24 directly or indirectly in the solar power conversion system 10.

The central controller 22 controls the operations of the remaining local controllers 20, 24. In one embodiment, the central controller 22 controls at least one of total output power, reactive power, frequency, and power factor. In addition to transmitting commands, it is also useful for, the central controller 22 to transmit data regarding the current state of operations to the local controllers 24 to ensure a smooth transition of central control to another of the local controllers 24 upon failure of the central controller 22.

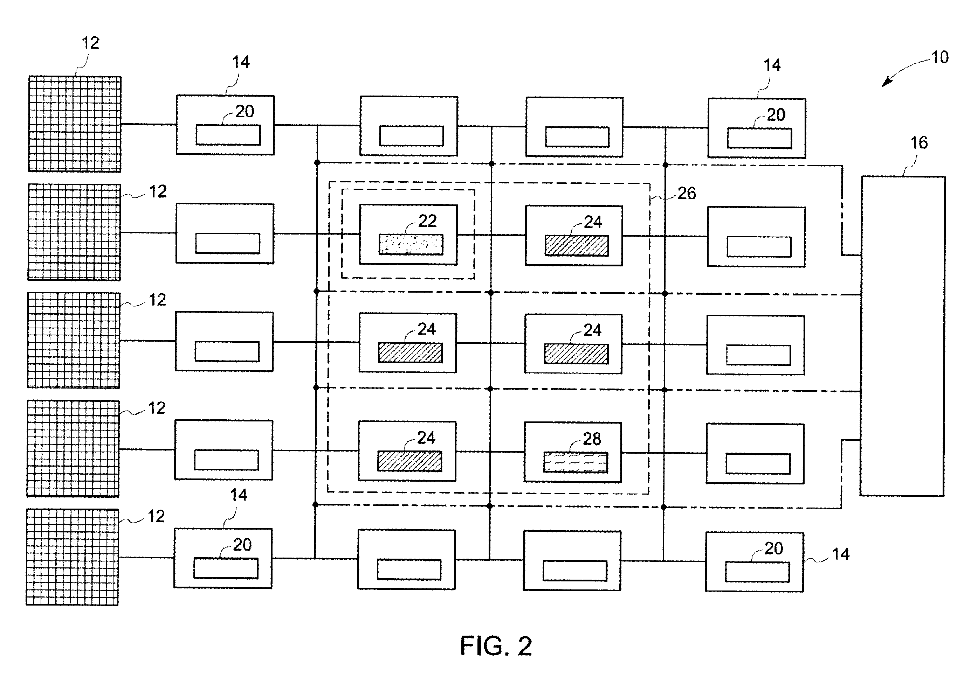

FIG. 2 is a schematic representation of the solar power conversion system after a failure of the prior central controller 22 and the transition of another local controller 28 into the role of the central controller 28. If the prior central controller 22 transmitted the current status of operations to the local controllers 24, upon failure of the prior central controller 22, the subsequent central controller 28 may use that information to ensure a more smooth transition and continuous operation of the system. Failure of a prior central controller may be one trigger for a controller switch. If desired, other triggers may include, for example, automatic shutdowns, scheduled maintenance, and operator commands, for example. In one embodiment, the status updates regarding operations further includes the IP address of the central controller 22. The IP address is used by the other local controllers 20, 24 to communicate with the central controller 22. Upon transition of operations of the central controller from one local controller to another, the local controller taking up the role of central controller also adapts to the IP address of the previous central controller so that the communication between the local controllers 20, 24 and the central controller remains unchanged.

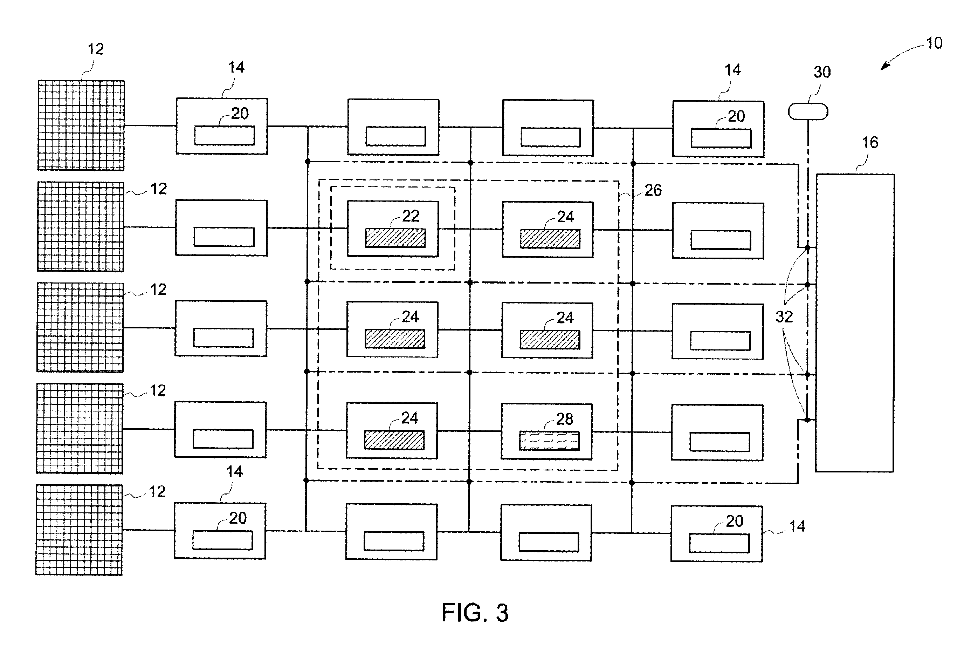

FIG. 3 is a schematic representation of the solar power conversion system 10 including a device 30 coupled at a point of interconnection 32 for sensing data in accordance with an embodiment of the invention. The device 30 senses data relating to at least one of current, voltage, and power. The device 30 further provides the sensed data to the central controller 28, and in some further embodiments to the local controllers 20, 24, for use by the central controller 28 in generating the control signals. In one embodiment, the central controller 28, the local controllers 20, 24, and the device 30 are communicatively coupled to each other via Ethernet or wirelessly. The device 30 transmits the sensed data to the central controller 28 that generates the control signals based on the sensed data. The central controller further transmits the control signals to the local controllers 20, 24 and controls the operations of the power converters 14 in the solar power conversion system 10. In one embodiment, each of the local controllers is directly or indirectly coupled to each other. In a specific embodiment, each of the local controllers is communicatively coupled to each other in a mesh network.

In another embodiment, the central controller 28 may delegate at least some of the processing functions of the central controller 28 to the local controllers 20. The commands are generated by the central controller 28 and are transmitted to the local controllers 20 for execution. For example, if the central controller 28 transmits a command to a local controller 20 to provide five percent reactive power, the local controller 20 will compute the commands that are necessary to send to the respective devices coupled to the local controller 20 for regulating the reactive power generation. Another example of delegation of functions includes following a response curve transmitted by the central controller 28. The local controller 20 would change the amount of active power or reactive power generated by the respective power converter based on the response curve provided by the central controller 28.

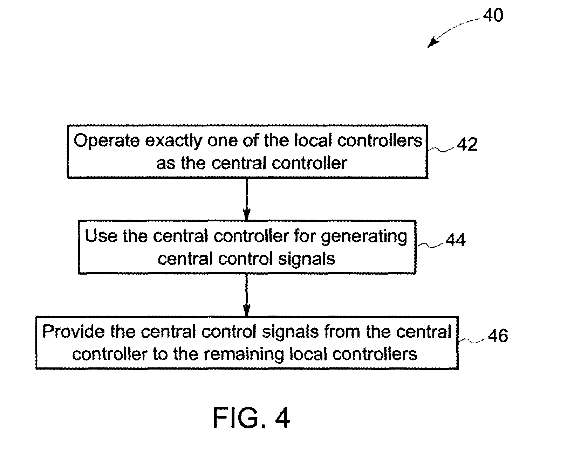

FIG. 4 is a flow chart representing steps involved in a method 40 for controlling the solar power conversion system comprising a plurality of power converters including respective local controllers with at least some of the local controllers being individually operable as a central controller in accordance with an embodiment of the invention. The method 40 includes operating exactly one of the local controllers as the central controller in step 42. In one embodiment, the local controller operates as the central controller by handshaking with each of the local controller directly or indirectly. The method 40 also includes using the central controller for generating central control signals in step 44. In one embodiment, the central controller obtains at least one of output voltage, output current and output power at a point of interconnection in the solar power conversion system for use by the central controller in generating the central control signals. In another embodiment, the central controller delegates at least some controls functions to the remaining local controllers. The method 40 further includes providing central control signals from the central controller to the remaining local controllers in step 46. In a specific embodiment, providing the central control signals from the central controller includes controlling at least one of total output power, reactive power, frequency and power factor.

In one embodiment, the method 40 includes updating the local controllers with operating status information from the central controller. In a specific embodiment, upon failure of the exactly one local controller operating as the central controller, a new local controller is identified to operate as the central controller. In a more specific embodiment, the new central controller initiates operations as the central controller from a last known status of the exactly one failed local controller operating as the central controller.

The various embodiments of the solar power conversion system described above provide a more efficient and reliable solar power conversion system. The system described above enables more operational time and efficiency for the power converter and reduces cyber threats.

It is to be understood that a skilled artisan will recognize the interchangeability of various features from different embodiments and that the various features described, as well as other known equivalents for each feature, may be mixed and matched by one of ordinary skill in this art to construct additional systems and techniques in accordance with principles of this disclosure. It is, therefore, to be understood that the appended claims are intended to cover all such modifications and changes as fall within the true spirit of the invention.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A power conversion system (10) comprising:
power converters (14) for converting power from a power source to power for transmission to a power grid, each of the power converters (14) comprising a local controller (20, 24);
wherein at least some of the local controllers (24) are individually operable as a central controller (22) for providing central control signals to the remaining local controllers,
wherein one of the local controllers (24) from the at least some local controllers is operable as the central controller (22) at a given point of time.

2. The system of claim 1, wherein the central controller (22) transmits a current state of operations to the at least some of the local controllers.

3. The system of claim 1 or claim 2, wherein, upon failure of one of the local controllers operating as the central controller (22), a new local controller is identified to operate as the central controller.

4. The system of claim 3, wherein the new local controller initiates the operations as the central controller using the current state of operations.

5. The system of any preceding claim, wherein each of the local controllers (20, 24) is directly or indirectly coupled to each other, and/or wherein the local controllers are communicatively coupled in a mesh network.

6. The system of any preceding claim, further comprising a device (30) coupled at a point of interconnection (32) in the power conversion system (10) for sensing data relating to at least one of current, voltage, and power and providing the sensed data to the central controller for use by the central controller (22) in generating the central control signals.

7. The system of any preceding claim, wherein the central controller (22) delegates at least some processing functions to the local controllers.

8. A solar power conversion system (10) comprising:
photovoltaic modules (12) for generating direct current (DC) power; and
the power conversion system of any preceding claim, the power converters (14) for converting the DC power to alternating current (AC) power,
wherein each of the power converters (14) comprises a local controller (20, 24) and at least some of the local controllers (24) are individually operable as a central controller (22) for providing central control signals to the remaining local controllers.

9. A method for controlling a solar power conversion system (10) comprising a plurality of power converters (14) including respective local controllers (20, 24) with at least some of the local controllers (24) being individually operable as a central controller (22), the method comprising:
operating exactly one of the local controllers (24) as the central controller (22);
using the central controller (22) for generating central control signals; and
providing the central control signals from the central controller (22) to the remaining local controllers.

10. The method of claim 9, further comprising updating the local controllers with operating status information from the central controller (22).

11. The method of claim 9 or claim 10, wherein, upon failure of the exactly one local controller (24) operating as the central controller (22), a new local controller is identified to operate as the central controller, and preferably further comprising initiating the operation as the central controller using the operating status information.

12. The method of claim 9, 10 or 11, wherein providing the central control signals from the central controller (22) comprises controlling at least one of total output power, reactive power, frequency, and power factor.

13. The method of any one of claims 9 to 12, further comprising obtaining at least one of output voltage, output current, and output power at a point of interconnection (32) in the solar power conversion system (10) for use by the central controller (22) in generating the central control signals.

14. The method of any one of claims 9 to 13, wherein operating exactly one local controller as the central controller (22) comprises handshaking with each local controller directly or indirectly.

15. The method of any one of claims 9 to 14, wherein using the central controller (22) for generating central control functions further comprises delegating at least some processing functions to the remaining local controllers.
